# EUROPEAN PATENT APPLICATION

(11) **EP 3 531 262 A1**
(43) Date of publication of application: **28.08.2019**
(21) Application number: 19159563.6
(22) Date of filing: 27.02.2019
(51) Int. Cl.: G06F 3/0484, G01D 7/00, B60K 37/00, B64D 43/00, B60K 35/00

(54) **AVIONICS SYSTEMS WITH EVENT RESPONSIVE SYNOPTICS**

(30) Priority: 27.02.2018 US 201862635975 P
(71) Applicant: Gulfstream Aerospace Corporation, Savannah, GA 31402-2206 (US)
(72) Inventor: WATKINS, Christopher, Savannah, GA 31402 (US); HAUSMANN, Jeff, Savannah, GA 31402 (US); KERSHAW, Nicholas, Savannah, GA 31402 (US); MEDIN, Kristin, Savannah, GA 31402 (US)
(74) Representative: LKGLOBAL Lorenz & Kopf PartG mbB Patentanwälte

(57) **Abstract**

An aircraft system is associated with operation of the aircraft and includes a control component selectable between a first state and a second state. Manipulating the control component between the first state and the second state changes an operation of the aircraft system. The processor is in electronic communication with the control component, the display, and the input device. The processor is programmed to: determine whether an event associated with the aircraft system has occurred; retrieve, from an electronic aircraft manual, crew guidance that includes a crew action to manipulate the control component in response to the event; generate a graphical representation of the crew guidance and the control component; generate a selector on the graphical representation for the control component to be manipulated by the crew action; and manipulate the control component in response to selection of the selector at the input device.

## Description

### CROSS-REFERENCE TO RELATED APPLICATIONS

This application claims the benefit of U.S. Provisional Application No. 62/635,975 filed on February 27, 2018. The disclosure of the above application is incorporated herein by reference.

### TECHNICAL FIELD

The technical field relates generally to avionics systems and methods for presenting graphical information in an aircraft, and more particularly relates to avionics systems and methods for presenting synoptics in response to events in the aircraft.

### BACKGROUND

In aviation, pilots are expected to navigate vast amounts of information. An aircraft manual, for example, includes guidance for pilots on tasks to be performed in response to various events. These conventional paper-based aircraft manuals are cumbersome and difficult to navigate.

Furthermore, pilots have traditionally utilized paper-based checklists in the operation of aircraft. Completing these conventional checklists requires referencing several different sources for various reasons. Referencing several different sources results in a complex checklist process that can also be quite slow.

### SUMMARY OF EMBODIMENTS

Various non-limiting embodiments of avionics systems, controllers, and methods of presenting aircraft information are disclosed herein.

In a first non-limiting embodiment, an aircraft includes, but is not limited to, an aircraft system, a display, an input device, and a processor. The aircraft system is associated with operation of the aircraft and includes a control component selectable between at least two states. Manipulating the control component between the at least two states changes an operation of the aircraft system. The processor is in electronic communication with the control component, the display, and the input device. The processor is programmed to: determine whether an event associated with the aircraft system has occurred; notify the crew of the event, retrieve, from an electronic aircraft manual, crew guidance that includes a crew action to manipulate the control component in response to the event; generate a graphical representation of the crew guidance and the control component; generate a selector on the graphical representation illustrating the control component to be manipulated by the crew action; and manipulate the control component in response to selection of the selector at the input device.

In a second non-limiting embodiment, an avionics system includes, but is not limited to, a display, an input device, and a processor in electronic communication with the display and the input device. The processor is programmed to determine whether an event has occurred associated with an aircraft system that is associated with operation of the aircraft and includes a control component selectable between a first state and a second state. Manipulating the control component between the first state and the second state changes an operation of the aircraft system. The processor is further programmed to: retrieve, from an electronic aircraft manual, crew guidance that includes a crew action to manipulate the control component in response to the event; generate a graphical representation of the crew guidance and the control component; generate a selector on the graphical representation illustrating the control component to be manipulated by the crew action; and manipulate the control component between the first state and the second state in response to selection of the selector at the input device.

In a third non-limiting embodiment, a method for graphical guidance of an electronic aircraft manual includes, but is not limited to: determining whether an event has occurred associated with an aircraft system that is associated with operation of the aircraft and includes a control component selectable between a first state and a second state, wherein manipulating the control component between the first state and the second state changes an operation of the aircraft system; retrieving, from an electronic aircraft manual, crew guidance that includes a crew action to manipulate the control component in response to the event; generating, on the display, a graphical representation of the crew guidance and the control component; generating a selector on the graphical representation illustrating the control component to be manipulated by the crew action; and manipulating the control component in response to selection of the selector at an input device.

### BRIEF DESCRIPTION OF THE DRAWINGS

Advantages of the present embodiments will be readily appreciated as the embodiments becomes better understood by reference to the following detailed description, when considered in connection with the accompanying drawings wherein:
FIG. 1 is a front view illustrating a non-limiting embodiment of a flight deck of an aircraft in accordance with the teachings of the present disclosure;
FIG. 2 is a block diagram illustrating a non-limiting embodiment of an avionics system of the aircraft of FIG. 1 in accordance with the teachings of the present disclosure;
FIG. 3 is a flow diagram illustrating a non-limiting embodiment of a method 300 of presenting aircraft information in accordance with the teachings of the present disclosure;
FIGS. 4A, 4B, 4C, 5A, and 5B are schematic diagrams illustrating images presented by the avionics system of FIG. 2 in accordance with the method of FIG. 3;
FIG. 6 is a flow diagram illustrating a non-limiting embodiment of a method for presenting aircraft information in accordance with the teachings of the present disclosure;
FIGS. 7A, 7B, 7C, 7D, 7E, and 7F are schematic diagrams illustrating images presented by the avionics system of FIG. 2 in accordance with the method of FIG. 6; and
FIG. 8 is a flow diagram illustrating a non-limiting embodiment of a method or graphical guidance of an electronic aircraft manual in accordance with the teachings of the present disclosure.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

In general, the embodiments described herein simplify an aircraft crew workload by linking event messages to controls that are manipulated as part of a response to the event indicated in an electronic aircraft manual. In some examples, execution of the controls is automated when appropriate and approved by the crew.

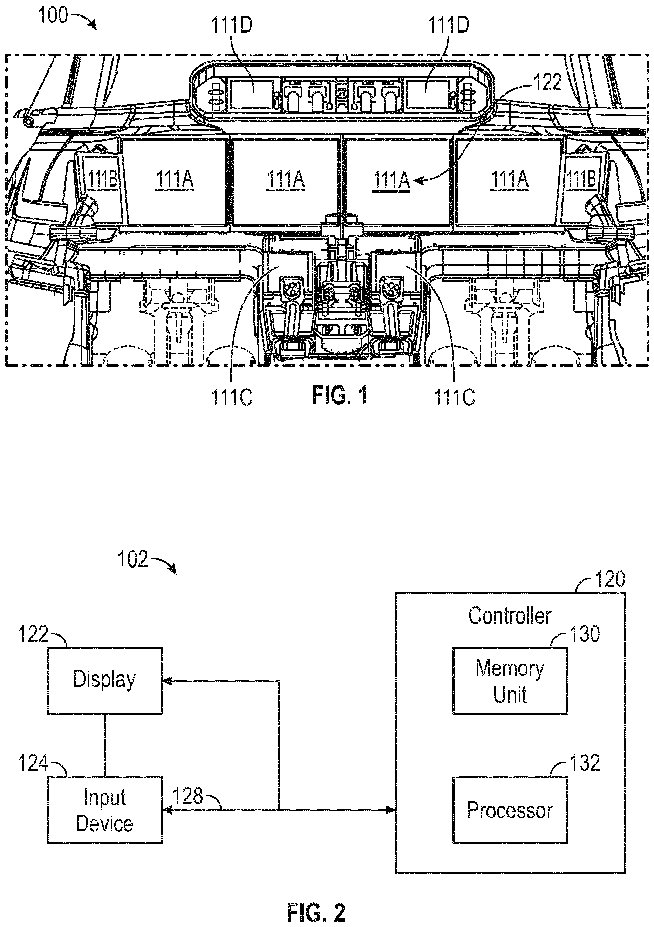

FIG. 1 is front view illustrating a flight deck of an aircraft 100 and FIG. 2 is a block diagram illustrating an avionics system 102 in accordance with teachings of the present disclosure. Although the context of the discussion contained herein is with respect to a business jet, it should be understood that the teachings of the present disclosure are compatible with all types of aircraft including, but not limited to, private jets, commercial jet passenger aircraft, cargo aircraft, military aircraft, rotorcraft, and the like. Furthermore, although the avionics system disclosed herein is described as being on an aircraft, it should be understood that the present avionics system is compatible with all types of vehicles. For example, and without limitation, the avionics system disclosed herein may be implemented on board automobiles, buses, trains, ships, spacecraft, and any other type of conveyance. Additionally, the avionics system disclosed herein is not limited to implementation on vehicles, but may also be utilized in tents, houses, buildings, stadiums, theaters, and other permanent and/or semi-permanent structures.

Avionics system 102 includes a controller 120, a display 122, an input device 124, and an interconnect 128. Interconnect 128 communicatively couples controller 120, display 122, and input device 124 for electronic communication. In the example provided, interconnect 128 is a communication or network bus, as will be appreciated by those with ordinary skill in the art. It should be appreciated that any suitable network topology or physical medium may be utilized for electronic communication in avionics system 102. In some embodiments, interconnect 128 is a wireless communications network.

Controller 120 is a hardware device that carries out instructions of a computer program, as is well known to those of ordinary skill in the art. Controller 120 is configured to execute the computer program to provide the functions described in the methods below. In some embodiments, controller 120 may be configured to provide other functions, such as the functions of a conventional flight management system (FMS) in addition to performing the tasks of the methods described herein. Controller 120 includes one or more memory units 130 that store electronic data and computer programs. For example, memory units 130 may be flash memory, spin-transfer torque random access memory (STT-RAM), magnetic memory, phase-change memory (PCM), dynamic random access memory (DRAM), or other suitable electronic storage media. In the example provided, memory units 130 store control logic with instructions that cooperate with a processor 132 of controller 120 to perform tasks of the method described below. In some embodiments, processor 132 may include one or more central processing units ("CPUs"), a microprocessor, an application specific integrated circuit ("ASIC"), a microcontroller, and/or other suitable device.

Furthermore, controller 120 may utilize multiple hardware computation devices that communicate to form the controller. In some embodiments, not all controls will be present on a common hardware device and display system. For example, an electronic checklist on an MFD touch-enabled display will call for a virtual breaker to be pulled on the TSC, which is located on a TSC display system. A request would be issued over the communication network. In another example, an electronic checklist (ECL) calls for a physical breaker to be pulled, and may show a picture of the breaker location. The ECL step would be completed once it sensed the breaker had been pulled. In another example, a primary hardware device performs some functions of controller 120 and a separate secondary hardware device generates images and commands display 122 to present the images.

Input device 124 receives user inputs from pilots and crew of the airplane. In the example provided, input device 124 is integrated with display 122 in a touchscreen device. Display 122 may be a single unit or may include multiple units. Each unit of display 122 is an electronic display that is electronically coupled with controller 120 to visually present information and data in an image according to electronic signals generated by controller 120. For example, display 122 may include cathode ray tubes ("CRT"), light-emitting diodes ("LED"), plasma panels, liquid crystal displays ("LCD"), projected images from a Digital Light Processing ("DLP") projector, and/or any other suitable electronic display technology.

In the example provided, display 122 includes screen units 111A, screen units 111B, screen units 111C, and screen units 111D. Screen units 111A are located in front of crew seats to act as Primary Flight Displays (PFDs) and Multi-Functional Displays (MFDs). Screen units 111B are tablet sized screens located to the left and right of screen units 111A. Screen units 111C are tablet sized screens located on a center console between crew members. Screen units 111D are located in an instrument panel in front of pilots, and are typically used for controlling a Flight Guidance Panel (FGP) or other aircraft systems. It should be appreciated that the methods and images below may be presented on any of screen units 111A-D without departing from the scope of the present disclosure. Display 122 may include other screens or visual presentation units without departing from the scope of the present disclosure. For example, display 122 may include Head-Up Displays (HUDs) or other screens having different configurations.

In some embodiments, input device 124 and display 122 are separate, such as when display 122 is a non-touch enabled screen and input device 124 is a cursor control device. Input device 124 may include trackballs, control sticks, or other suitable cursor control devices for the pilot or crew to communicate with controller 120. In some embodiments, input devices 124 may include microphones for voice recognition, or may be integrated with gesture sensors. It should be appreciated that other input devices 124 may be utilized without departing from the scope of the present disclosure.

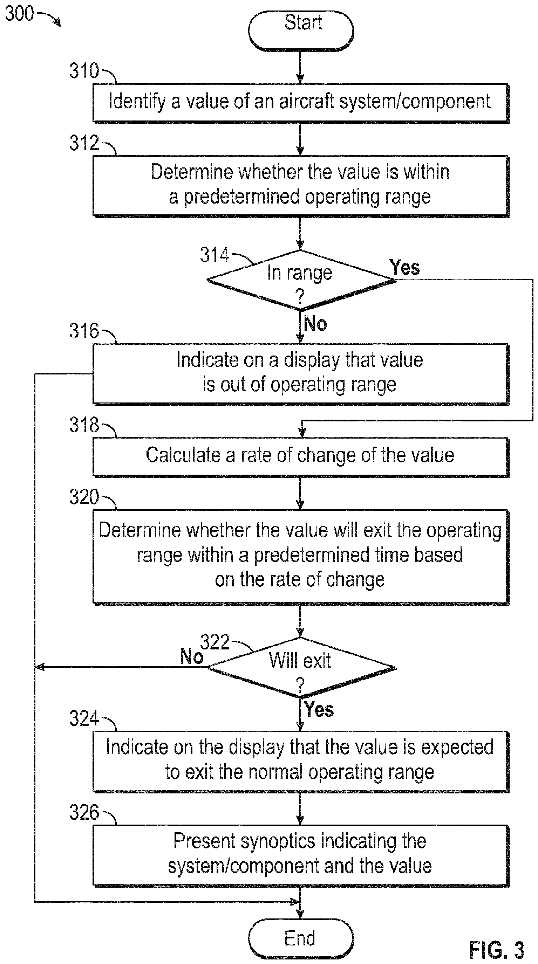

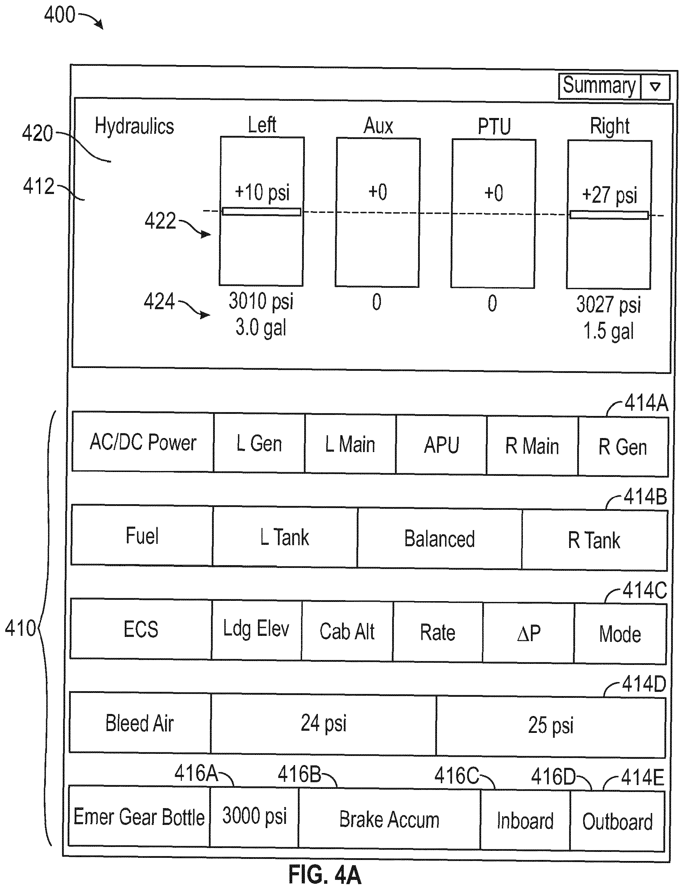

FIG. 3 is a flow diagram illustrating a non-limiting embodiment of a method 300 of presenting aircraft information in image 400 of FIGS. 4A-C in accordance with some embodiments. In the example provided, controller 120 performs the tasks of method 300 and generates image 400.

Image 400 of FIG. 4A includes a collapsed row portion 410 and an expanded row 412. The system indicated in the expanded row 412 and the systems that are indicated in collapsed row portion 410 may vary based on selections by a user or based on conditions of the systems indicated. In general, the collapsed row portion 410 permits a decluttered overall view of the various systems, while expanded row 412 permits viewing further details of system components and interaction with the system components.

Collapsed row portion 410 includes first through fifth collapsed rows 414A-E that each display characteristics or a status of an aircraft system in column cells of a single short row. In the example provided, the aircraft system characteristics and/or status are indicated by color based on whether components or conditions of the system are in a normal range, are trending out of range, or are out of normal range, as will be described below. In the example provided, the normal range is indicated by green text, the trending values are indicated by amber text, and out of normal range values are indicated by red text.

In the example provided, collapsed row 414A presents AC/DC Power characteristics of the Left Generator, Left Main, Auxiliary Power Unit (APU), Right Main, and Right Generator in the column cells. Fuel collapsed row 414B presents Fuel characteristics of the Left Tank, of the tank balance, and of the Right Tank in the column boxes. The remaining collapsed rows indicate similar states of systems for their respectively labeled rows, as will be appreciated by those with ordinary skill in the art.

In the example provided, collapsed row 414E includes column cells 416A-D, and other collapsed rows include similar column cells. For example, collapsed row 414D includes column cells 416A-B and collapsed row 414C includes column cells 416A-D plus an additional column (not numbered). The number of column cells may vary by row.

Expanded row 412 presents additional information about the system indicated in expanded row 412 in a graphic representation 420. Graphic representation 420 illustrates system components 422 of the system and component values 424 of the system. For example, the left hydraulic component 422 is illustrated along with pressure and volume component values 424.Referring again to FIG. 3, and with continued reference to FIGS. 4A-C, task 310 identifies a value of an aircraft system or aircraft component. As used herein, to identify a value means to measure, retrieve, derive, or otherwise determine a numerical value of the system. For example, controller 120 at task 310 may identify component values 424 as a pressure of system components 422 in a hydraulics system.

Task 312 determines whether the value is within a predetermined operating range. For example, controller 120 may determine whether component values 424 are within a predetermined standard or normal operating range in which components 422 are designed to operate. In the example provided, the predetermined operating range is retrieved from a database and is defined by values determined by the aircraft manufacturer, operator, or maintenance crew. When the value is not within the predetermined operating range, task 314 routes method 300 to task 316. When the value is within the predetermined operating range, task 314 routes method 300 to task 318.

Task 316 indicates on a display that the value is out of the predetermined operating range. For example, controller 120 may present text and graphics of the system red in the respective row 414A-E or 412 when the value is above an upper threshold or below a lower threshold of the predetermined operating range. In some embodiments, the system for which the value is outside of the predetermined operating range is selected by controller 120 as the expanded row 412. For example, if a pressure in the bleed air system exceeds an upper threshold, controller 120 may select row 414D as the new expanded row 412 and may present a graphical representation of the bleed air system in the new expanded row 412.

Task 318 calculates a rate of change of the value. For example, controller 120 may calculate a rate of change of fuel weight in a left fuel tank, a rate of change of fuel weight in a right fuel tank, and a rate of change of a weight difference between the left fuel tank and the right fuel tank for the fuel system of row 414B.

Task 320 determines whether the value will exit the operating range within a predetermined time based on the rate of change. For example, controller 120 may determine whether the weight difference between the left fuel tank and the right fuel tanks will exceed a normal operating difference range within ten minutes using the calculated rate of change of the weight difference. It should be appreciated that any monitored values and any amount of time may be utilized without departing from the scope of the present disclosure. Task 322 ends method 300 when the value will not exit the predetermined operating range within the predetermined time. Task 322 advances method 300 to task 324 when the value will exit the predetermined operating range within the predetermined time.

In some embodiments, variance from equilibrium may be used instead of or in addition to the rate of change to determine whether the value is trending out of range. For example, when a stabilizer angle doesn't match an elevator angle; a rudder is trimmed to the right of center.

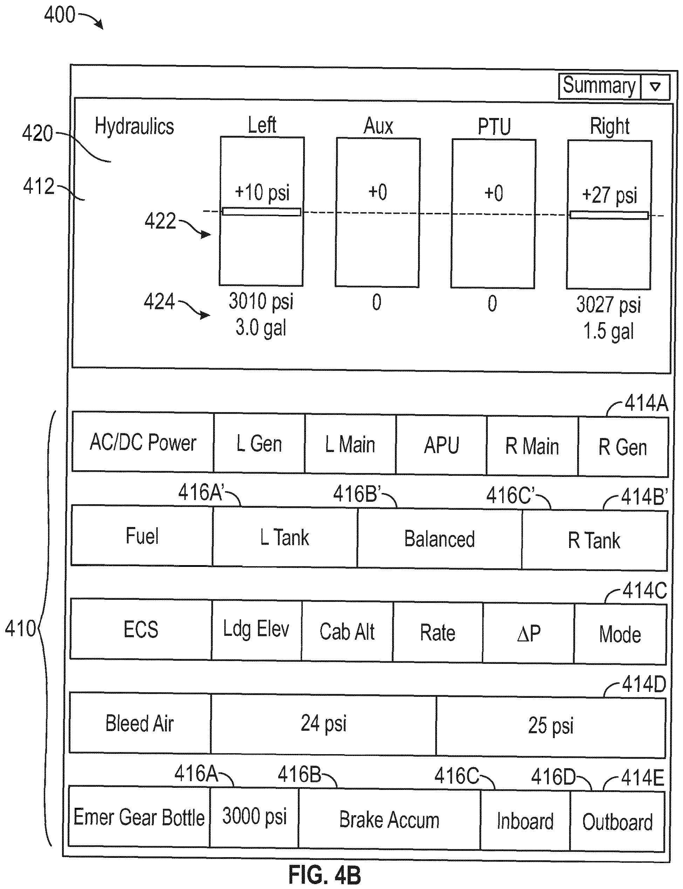

Task 324 indicates on the display that the value is expected to exit the predetermined normal operating range. For example, controller 120 may generate image 400 of FIG. 4B. Image 400 of FIG. 4B is similar to image 400 of FIG. 4A, where like numbers refer to like features. Image 400 of FIG. 4B, however, includes collapsed row 414B' instead of collapsed row 414B. Collapsed row 414B' is amber colored and includes amber colored column cells 416A', 416B', and 416C'. In the example provided, the amber color is the indication that the fuel balance between the left fuel tank and the right fuel tank will exceed a predetermined normal difference range within a predetermined time. In some embodiments, controller 120 may indicate that the value is trending out of range by changing visual characteristics such as a color, a line location, a line weight, a shape, a fill type, and/or a fill color to indicate the value is expected to exit the range by changing the appearance of the value. Changing the appearance of the value may include changing the displayed numeral, the surrounding visual features, or combinations thereof.

In some embodiments, task 324 indicates on the display that the value is near the boundary of the normal operating range. For example, when the fuel balance difference is near the maximum difference that is still in range, then controller 120 may generate image 400 even if the fuel balance difference is not changing. By indicating the value is near the boundary, task 324 indicates the pilot should monitor a value that is near the edge of normal range, but is not changing, and therefore not trending to out-of-range.

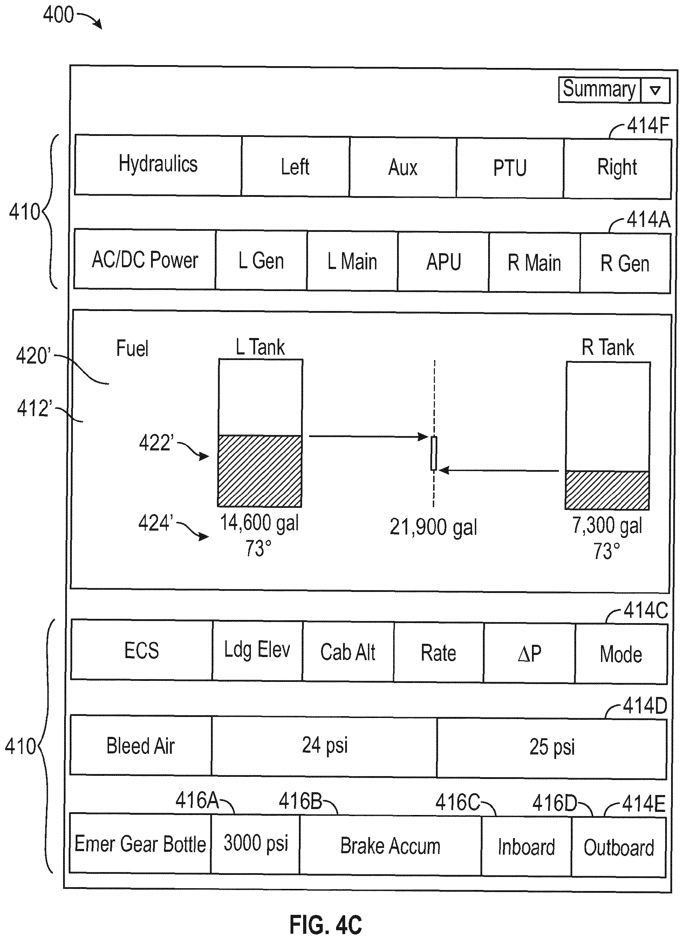

Task 326 presents graphical representations or synoptics indicating the system, the control component, and the value that will exit the predetermined normal operating range. For example, controller 120 may generate image 400 of FIG. 4C. Image 400 of FIG. 4C is similar to image 400 of FIG. 4B, where like numbers refer to like components. Image 400 of FIG. 4C, however, includes expanded row 412'. Expanded row 412' includes amber graphical representation 420', amber control component representations 422', and amber component values 424' for the fuel system. In the example provided, controller 120 makes the hydraulics system a collapsed row 414F and selects the fuel system row as the new expanded row 412' in response to the determining that the fuel system value will exit the predetermined normal operating range within the predetermined time. In some embodiments, controller 120 may select the fuel system row as the new expanded row 412' in response to selection of the row by a user of the avionics system.

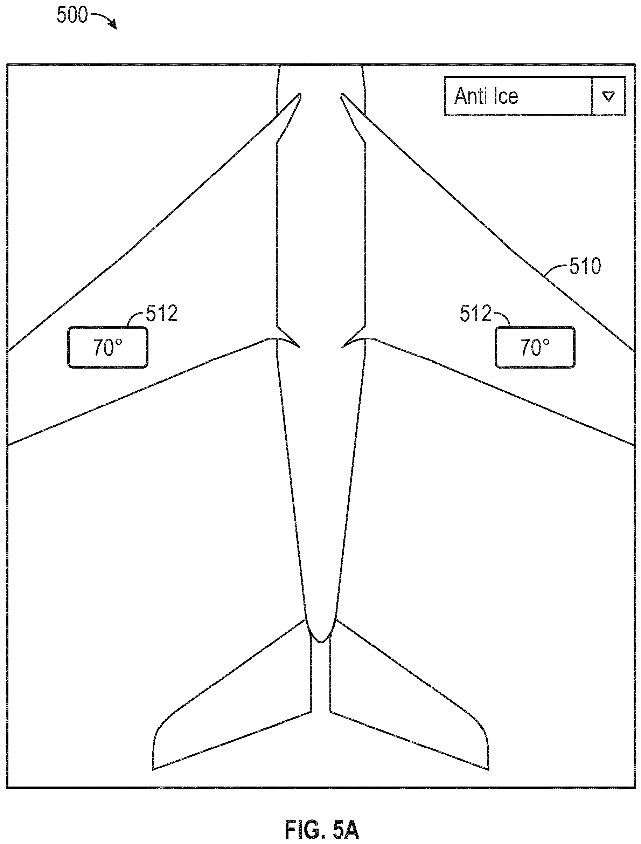

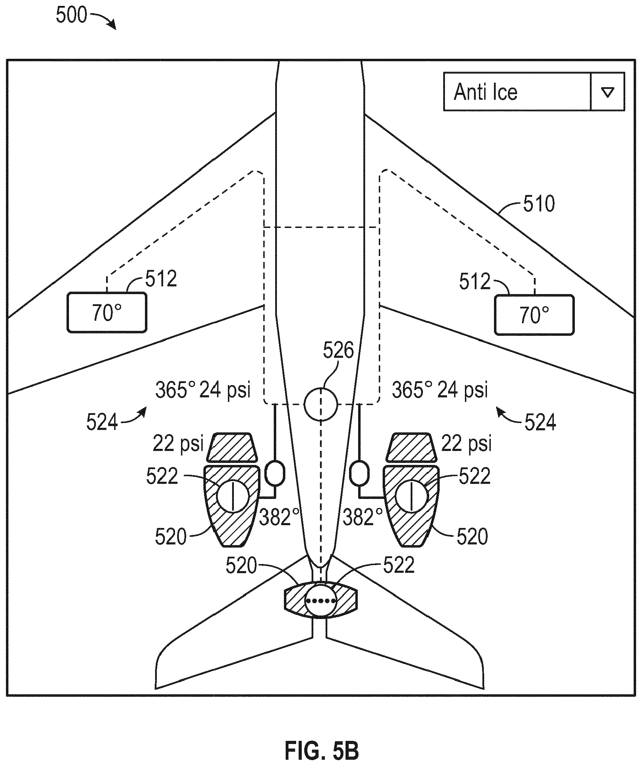

FIGS. 5A and 5B are schematic diagrams illustrating images 500 of an Anti-Ice system in accordance with the teachings of the present disclosure. In the example provided, controller 120 generates images 500 for presentation on display 122. Images 500 are synoptics with layers of information presented under different conditions.

Image 500 of FIG. 5A is a first layer that includes a system representation 510 and control component value boxes 512. In the Anti-Ice example provided, system representation 510 includes an aircraft representation and component value boxes 512 indicate a temperature at wings of the aircraft.

Image 500 of FIG. 5B includes the first layer and a second layer. The second layer further includes engine representations 520, state selectors 522, temperature and pressure values 524, and valve representations 526. In the example provided, state selectors 522 and valve representations 526 are highlighted to indicate that they are selectable by users of avionics system 102. In response to a user pressing touchscreen enabled display 122 where state selectors 522 or valve representations 526 are presented, controller 120 toggles the on/off state of the engines or opens/closes the valves.

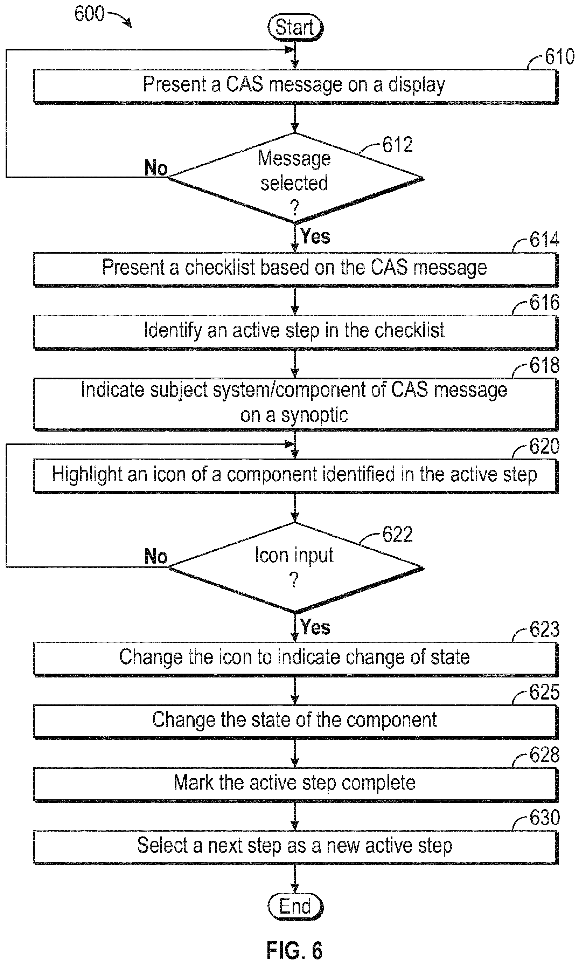

FIG. 6 is a flow diagram illustrating a non-limiting embodiment of a method 600 for presenting aircraft information in accordance with the teachings of the present disclosure. In the example provided, controller 120 performs method 600 using display 122.

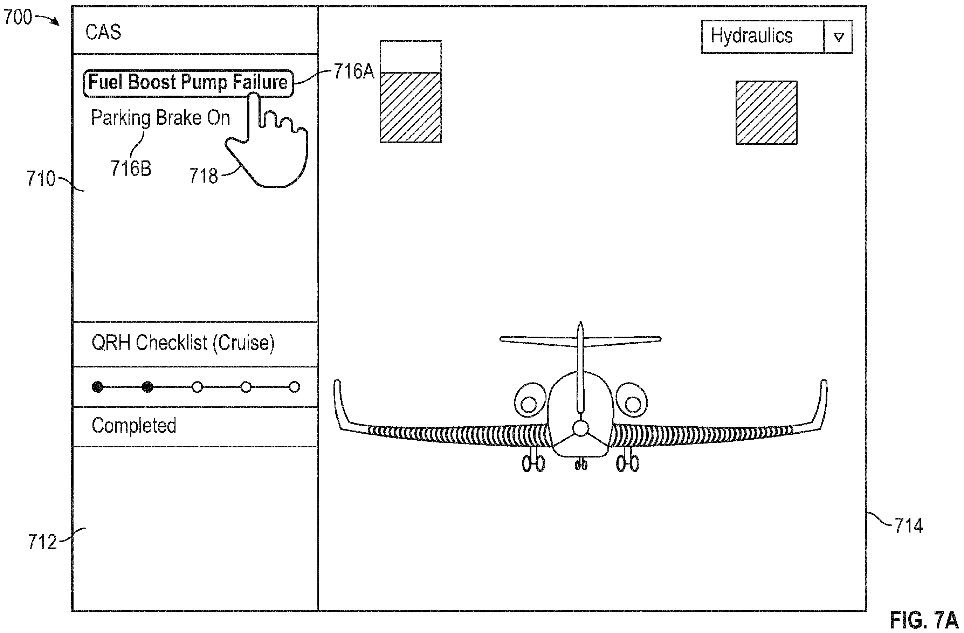

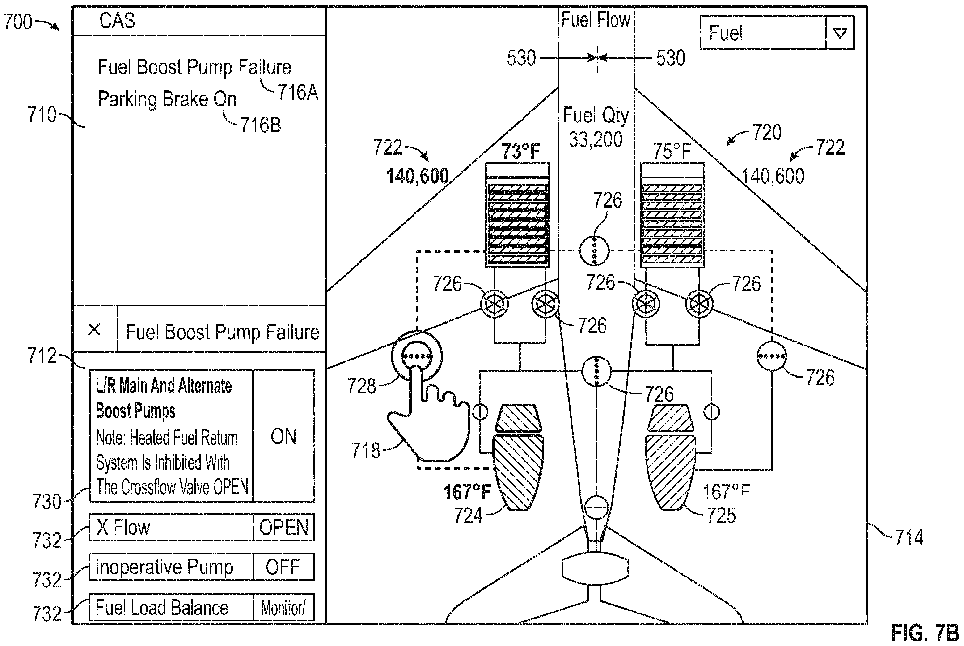

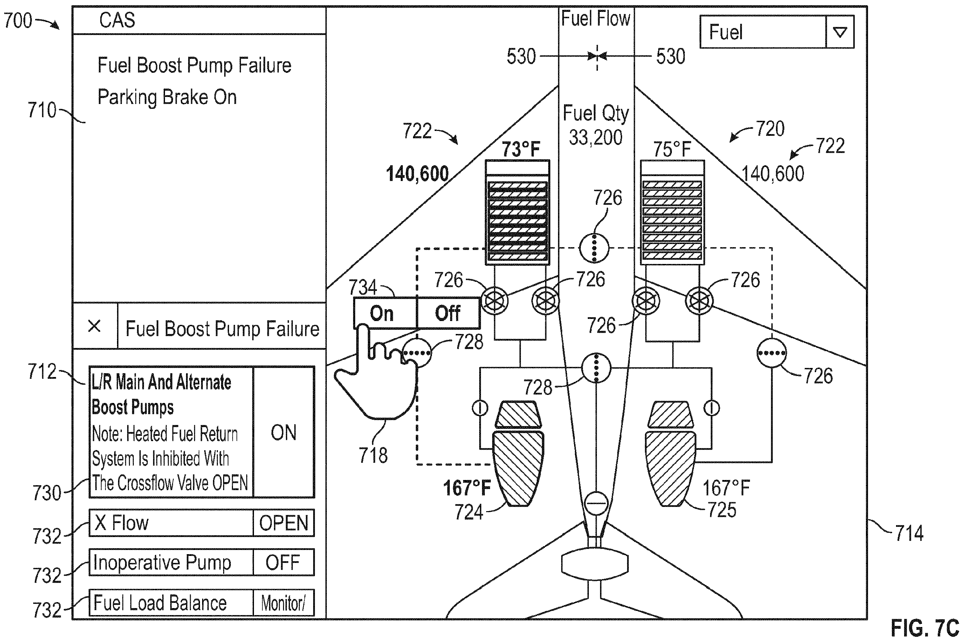

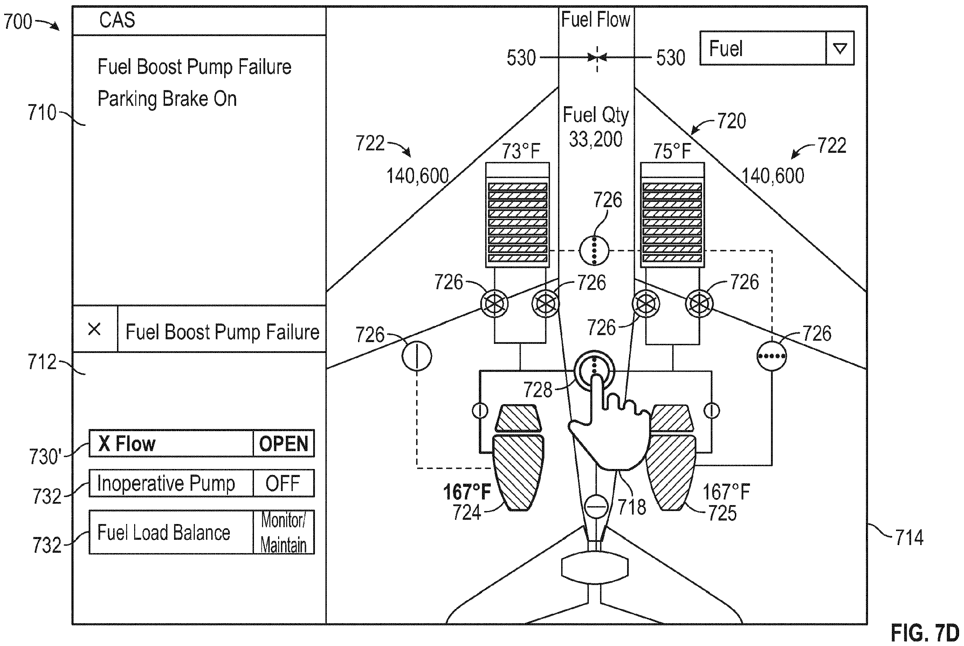

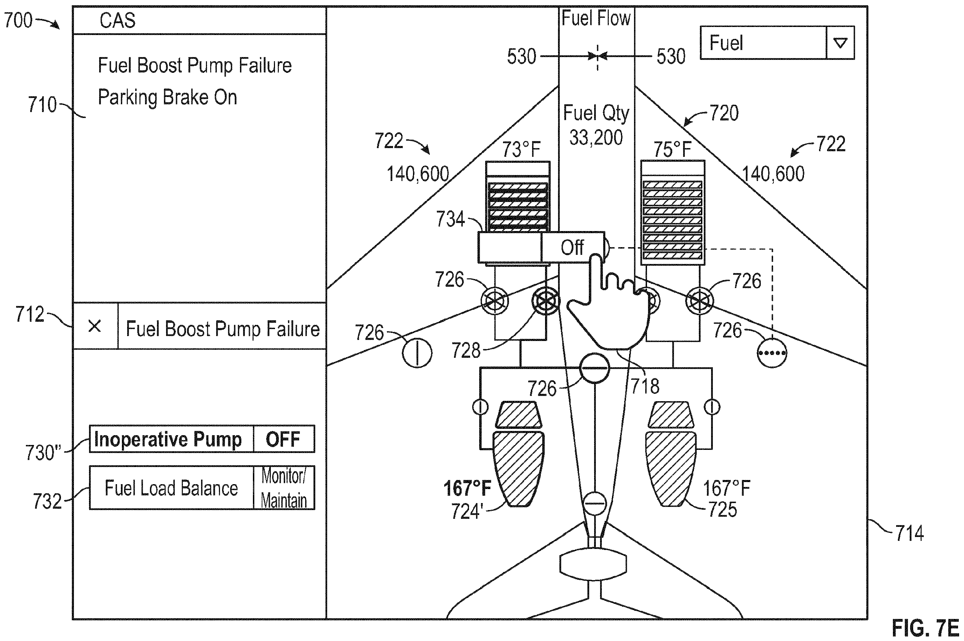

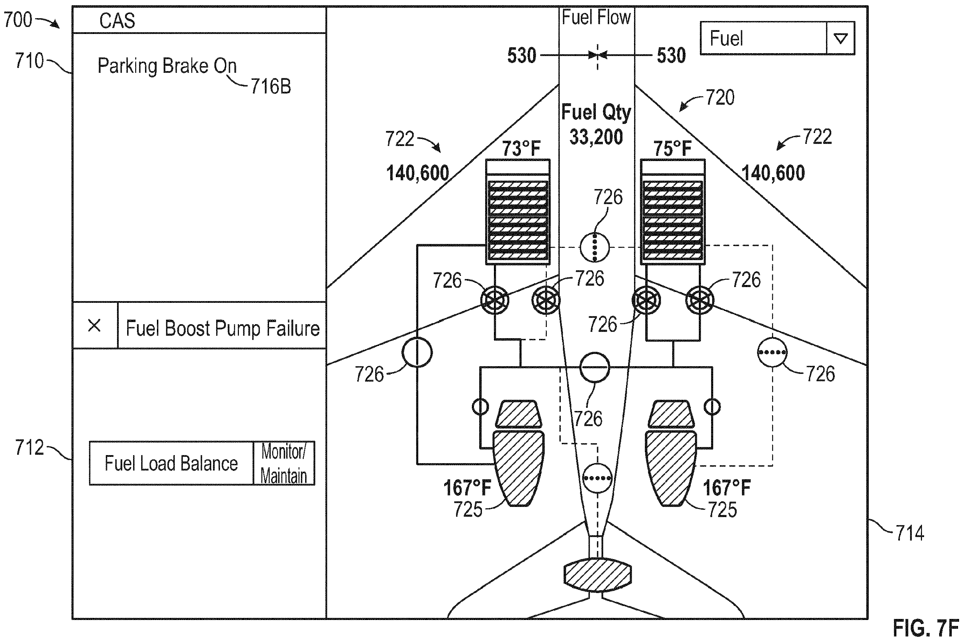

Referring now to FIGS. 7A, 7B, 7C, 7D, 7E, and 7F are schematic diagrams illustrating images 700 presented by the avionics system of FIG. 2 in accordance with the method of FIG. 6. Image 700 includes a message information portion 710, a checklist portion 712, and a synoptic portion 714. Message portion 710 presents Crew Alerting System (CAS) messages, checklist portion 712 presents electronic checklists, and synoptic portion 714 presents synoptics or graphics, such as any graphical indication of an aircraft system. Although the embodiments described herein integrate the touch enabled controls with synoptic portion 714, it should be appreciated that the control of systems shown in synoptic portion 714 may be located in different portions of avionics system 102. In some embodiments, synoptic portion 714 may be located in different portions of image 700, including on separate display screens of display 122.

Referring again to FIG. 6, and with continued reference to FIGS. 7A-F, task 610 presents a CAS message on a display. For example, controller 120 may present a first CAS message 716A and a second CAS message 716B in message portion 710 of image 700 on display 122.

Task 612 determines whether a message is selected. For example, controller 120 may determine that first CAS message 716A is selected when a crew input device 718 touches display 122 where first CAS message 716A is presented. In the example provided, crew input device 718 is a crew member's finger. It should be appreciated that any suitable input device may be used, such as trackballs, mice, other curser control devices, or voice input. When the message is not selected, method 600 returns to task 610 to monitor for messages. When the message is selected, method 600 proceeds to task 614.

Task 614 presents a checklist based on the CAS message. For example, controller 120 may present a fuel boost pump failure checklist in checklist portion 712 and a system synoptic 720 in synoptic portion 714 as illustrated in FIG. 7B.

Task 616 identifies an active step in the checklist. For example, checklist portion 712 may present active step 730 and inactive steps 732. The active step is the action indicated by the checklist that the crew member is intended to perform next. The actions indicated by the steps are similar to the actions indicated in a conventional paper based checklist, as will be appreciated by those with ordinary skill in the art. In the example provided, active step 730 is indicated by presenting text and lines of active step 730 in amber, whereas inactive steps 732 are presented in white. It should be appreciated that the specific colors or even the presence of color may vary without departing from the scope of the present disclosure.

Task 618 indicates on a synoptic the system and/or component that is the subject of the CAS message. For example, controller 120 may present a graphical representation of the fuel system as system synoptic 720 when the selected CAS message is the Fuel Boost Pump Failure. Synoptic 720 includes component value indicators 722, abnormally operating component 724, non-abnormally operating component 725, non-highlighted component representations 726, and highlighted component representation 728.

Task 620 highlights an icon of a component identified in the active step. For example, controller 120 enlarges and makes brighter a left valve highlighted component representation 728 when active step 730 indicates that the left valve should be open before proceeding with the checklist.

Task 622 determines whether there is an icon input. For example, controller 120 may determine whether a crew member has touched display 122 where highlighted component representation 728 is presented. When there is not an icon input, method 600 returns to task 620. When there is an icon input, method 600 proceeds to task 624. In some embodiments, the icon input is not physically co-located on a touchscreen display. For example, a physical switch in the flight deck may be used to provide an input associated with the component related to the icon.

Task 623 changes the icon to indicate the change of state. The change may be a different static image, may be an animation, or may be other similar changes. For example, controller 120 may cause highlighted component representation 728 to rotate 90 degrees to indicate a change of state of the valve. In some embodiments, a fan icon rotates for several seconds. In some embodiments, the changes include a change of color, highlighting, or other suitable changes.

Task 625 changes the state of the component. For example, controller 120 may make the state of the left fuel valve "open" when input device 718 selects "on" in an interaction menu 734 presented in response to input device 718 selecting highlighted component representation 728, as shown in FIG. 7C.

Task 628 marks the active step complete and task 630 selects a next step as a new active step. For example, controller 120 may mark active step 730 complete and may select the next inactive step 732 as a new active step 730', as shown in FIG. 7D. Method 600 ends after task 630. In the example provided, method 600 does not move to task 628 until component has finished changing state. For example, the active step is not marked complete until the mechanical actuation of a valve has completed and the valve is fully rotated.

In the example provided, method 600 is performed repeatedly until there are no active steps to complete for a selected CAS message. For example, a new highlighted component representation 728 is indicated as the cross-flow valve in FIG. 7D for the new active step 730'. Similarly, an inoperative pump is indicated as highlighted component representation 728 when a next active step 730" indicates to turn off the inoperative pump. When the CAS message is no longer presented in message portion 710, there are no more active steps. In the example provided, controller 120 presents fuel system synoptic 720 to permit monitoring and maintaining the fuel system, as indicated as the last action of the fuel boost pump failure checklist and shown in FIG. 7F.

In some embodiments, a synoptic summary page indicates a failure, and clicking on the failure brings up a relevant synoptic page showing failure and available controls to manage the failure. In other words, the synoptic page may be presented from CAS messages (with checklist as described above) or from the Summary Synoptic page, which would pull up relevant synoptic and associated checklist without interacting with the checklist described above.

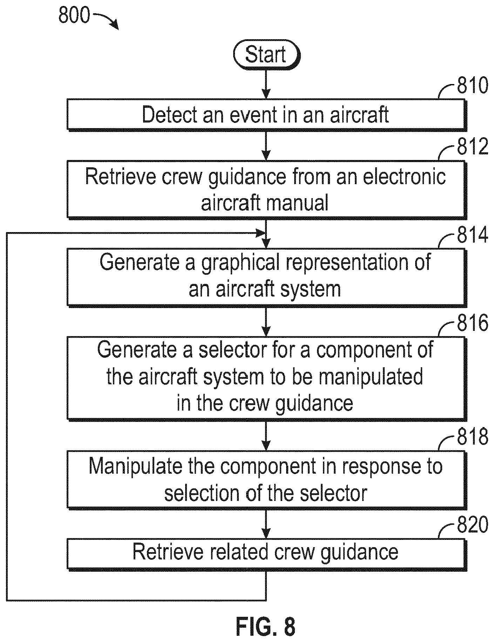

Referring now to FIG. 8, a method 800 for graphical guidance of an electronic aircraft manual is illustrated in flow diagram form in accordance with some embodiments. Task 810 detects an event in an aircraft. For example, controller 120 may determine whether an event associated with an aircraft system has occurred. In some embodiments, the event is an indication of a value trending out of a normal operating range or a value being outside of a second range in accordance with method 300.

Task 812 retrieves crew guidance from an electronic aircraft manual. The crew guidance includes a crew action to manipulate the control component in response to the event.

Task 814 generates a graphical representation of an aircraft system and a graphical representation of the control component. The aircraft system is associated with operation of the aircraft and includes a component that is selectable between at least a first state and a second state. Manipulating the component between the first state and the second state changes an operation of the aircraft system. For example, the control component may be a valve manipulated between an open state and a closed state, as discussed above. It should be appreciated that the component may have more than two states without departing from the scope of the present disclosure, and the ordinals "first" and "second" are used as a naming convention to distinguish between the states without implying any temporal or primary/secondary status.

In some embodiments, the graphical representation is based on an active step of an electronic checklist. In some embodiments, task 814 identifies the active step of the electronic checklist in response to selection of a Crew Alerting System (CAS) message presented on the display. In some embodiments, task 814 indicates the aircraft system is a subject of the CAS message on the display and highlights the control component.

Task 816 generates a selector for a component of the aircraft system to be manipulated in the crew guidance. The selector is generated on the graphical representation illustrating the component to be manipulated by the crew action. For example, task 816 may generate highlighted component representation 728, as discussed above.

Task 818 manipulates the component in response to selection of the selector at an input device. In some embodiments, task 818 additionally changes an appearance of the component in response to selection of the selector. In some embodiments, task 818 animates the selector in response to selection of the selector.

Task 820 retrieves related crew guidance. For example, controller 120 may determine whether there are related tasks associated with manipulation of the component. Controller 120 may then retrieve, from the electronic aircraft manual in response to selection of the selector, a task related to a second crew guidance for a second aircraft system whose operation is changed by manipulation of the control component. Controller 120 may then replace the graphical representation with a second guidance graphical representation of the second crew guidance. Method 800 then returns to task 814, where the second system graphical representation becomes the graphical representation of task 814.

## Claims

1. An aircraft, comprising:
an aircraft system associated with operation of the aircraft and including a control component selectable between a first state and a second state, wherein manipulating the control component between the first state and the second state changes an operation of the aircraft system;
a display;
an input device; and
a processor in electronic communication with the control component, the display, and the input device, the processor programmed to:
determine whether an event associated with the aircraft system has occurred;
retrieve, from an electronic aircraft manual, crew guidance that includes a crew action to manipulate the control component in response to the event;
generate a graphical representation of the crew guidance that includes the control component;
generate a selector on the graphical representation illustrating the control component to be manipulated by the crew action; and
manipulate the control component between the first state and the second state in response to selection of the selector at the input device.

2. The aircraft of claim 1, wherein the processor is further programmed to change an appearance of the control component in response to selection of the selector.

3. The aircraft of claim 1, wherein the processor is further programmed to animate the selector in response to selection of the selector.

4. The aircraft of claim 1, wherein the processor is further programmed to:
determine whether there are related tasks associated with manipulation of the control component;
retrieve, from the electronic aircraft manual in response to selection of the selector, a task related to a second crew guidance for a second aircraft system whose operation is changed by manipulation of the control component;
replace the graphical representation with a second crew guidance graphical representation.

5. The aircraft of claim 1, wherein the processor is further programmed to generate the graphical representation to include an active step of an electronic checklist.

6. The aircraft of claim 5, wherein the processor is further programmed to identify the active step of the electronic checklist in response to selection of a Crew Alerting System (CAS) message presented on the display.

7. The aircraft of claim 6, wherein the processor is further programmed to indicate the aircraft system is a subject of the CAS message on the display and to highlight the control component in the graphical representation.

8. An avionics system for an aircraft, the avionics system comprising:
a display;
an input device; and
a processor in electronic communication with the display and the input device, the processor programmed to:
determine whether an event has occurred associated with an aircraft system that is associated with operation of the aircraft and includes a control component selectable between a first state and a second state, wherein manipulating the control component between the first state and the second state changes an operation of the aircraft system;
retrieve, from an electronic aircraft manual, crew guidance that includes a crew action to manipulate the control component in response to the event;
generate a graphical representation of the crew guidance that includes the control component;
generate a selector on the graphical representation illustrating the control component to be manipulated by the crew action; and
manipulate the control component between the first state and the second state in response to selection of the selector at the input device.

9. The avionics system of claim 8, wherein the processor is further programmed to change an appearance of the control component in response to selection of the selector.

10. The avionics system of claim 8, wherein the processor is further programmed to animate the selector in response to selection of the selector.

11. The avionics system of claim 8, wherein the processor is further programmed to:
determine whether there are related tasks associated with manipulation of the control component;
retrieve, from the electronic aircraft manual in response to selection of the selector, a task related to a second crew guidance for a second aircraft system whose operation is changed by manipulation of the control component;
replace the graphical representation with a second crew guidance graphical representation.

12. The avionics system of claim 8, wherein the processor is further programmed to generate the graphical representation based on an active step of an electronic checklist.

13. The avionics system of claim 12, wherein the processor is further programmed to identify the active step of the electronic checklist in response to selection of a Crew Alerting System (CAS) message presented on the display.

14. The avionics system of claim 13, wherein the processor is further programmed to indicate the aircraft system is a subject of the CAS message on the display and to highlight the control component.

15. A method for graphical guidance of an electronic aircraft manual, the method comprising:
determining whether an event has occurred associated with an aircraft system that is associated with operation of the aircraft and includes a control component selectable between a first state and a second state, wherein manipulating the control component between the first state and the second state changes an operation of the aircraft system;
retrieving, from the electronic aircraft manual, crew guidance that includes a crew action to manipulate the control component in response to the event;
generating, on the display, a graphical representation of the crew guidance and the control component;
generating a selector on the graphical representation illustrating the control component to be manipulated by the crew action; and
manipulating the control component between the first state and the second state in response to selection of the selector at an input device.

16. The method of claim 15, further comprising changing an appearance of the control component in response to selection of the selector.

17. The method of claim 15, further comprising animating the selector in response to selection of the selector.

18. The method of claim 17, further comprising:
determining whether there are related tasks associated with manipulation of the control component;
retrieving, from the electronic aircraft manual in response to selection of the selector, a task related to a second crew guidance for a second aircraft system whose operation is changed by manipulation of the control component;
replacing the graphical representation with a second crew guidance graphical representation on the display.

19. The method of claim 15, further comprising generating the graphical representation and the control component in an active step of an electronic checklist.

20. The method of claim 15, further comprising indicating the aircraft system is a subject of a CAS message on the display and highlighting the control component on the display.
